# EUROPEAN PATENT APPLICATION

(11) **EP 2 328 206 A1**
(43) Date of publication of application: **01.06.2011**
(21) Application number: 09797649.2
(22) Date of filing: 02.06.2009
(51) Int. Cl.: H01M 2/10, H01M 4/38, H01M 4/48

(54) **BATTERY PACK**

(30) Priority: 16.07.2008 JP 2008184419
(71) Applicant: Panasonic Corporation, Kadoma-shi Osaka 571-8501 (JP)
(72) Inventor: UGAJI, Masya c/o Panasonic Corporation, Osaka 540-6207 (JP); TAKEZAWA Hideharu c/o Panasonic Corporation, Osaka 540-6207 (JP); YAMAMOTO Taisuke c/o Panasonic Corporation, OSAKA 540-6207 (JP); HIRAKAWA Yasushi c/o Panasonic Corporation, Osaka 540-6207 (JP)
(74) Representative: TBK
(86) International application number: PCT/JP2009/002468
(87) International publication number: WO 2010/007720

(57) **Abstract**

A battery pack 1 of the present invention includes: a plurality of lithium ion secondary batteries 10 electrically connected together in series, in parallel, or in series-parallel combination; a tray 11; and a housing 12. The lithium ion secondary batteries 10 each include an electrode assembly containing an alloy-based negative electrode active material serving as a negative electrode active material, and each have a sealed surface 10a. The lithium ion secondary battery 10 is mounted on the tray. The housing 12 accommodates the tray 11 with the lithium ion secondary battery 10 mounted thereon. Even if high-temperature contents are produced in the interior of the lithium ion secondary battery 10 in the event of internal short circuiting or overcharging, this configuration prevents the high-temperature contents from leaking out of the batter pack 1, and thus improves the safety of the battery pack 1.

## Description

### [Technical Field]

The present invention relates to a battery pack. More specifically, the present invention mainly relates to an improvement of the inner structure of a battery pack.

### [Background Art]

Battery packs have been widely used as power sources of portable electronic devices, such as mobile phones, notebook personal computers, video cameras, digital cameras, and cordless electric power tools. Battery packs are typically structured such that a plurality of batteries that are electrically connected together in series, in parallel, or in series-parallel combination are inserted into a housing. A bag-like housing, a case, and the like made of a laminate film, a metal material, a plastic material, and the like have been used as the housing. Lithium ion secondary batteries have been widely used as the batteries to be inserted into the housing in recent years.

Some lithium ion secondary batteries contain a carbon material as a negative electrode active material, and some contain an alloy-based negative electrode active material as a negative electrode active material. The alloy-based negative electrode active material is a material capable of absorbing lithium by alloying with lithium and absorbing and desorbing lithium at a negative electrode potential. For example, silicon, a compound containing silicon, tin, a compound containing tin, and the like have been known as examples of such an alloy-based negative electrode active material.

Lithium ion secondary batteries including an alloy-based negative electrode active material are remarkably high in capacity and output power, can be easily reduced in size and thickness as compared to other secondary batteries, and are excellent in safety for the users. However, because of their high output power, a large amount of heat is generated in the event of internal short circuiting, overcharging, or other events, causing a possibility of smoking and other troubles. Further, the smoking may result in firing. In view of the safety for the users, some countermeasures must be taken, assuming that the internal temperature of such a lithium ion secondary battery becomes about several hundred degrees centigrade in the event of internal short circuiting, overcharging, or other events, and the chemical contents thereof melt and leak out of the battery.

In addition, in recent years, as portable electronic devices have become smaller in size and thinner in thickness, battery backs are also demanded to be smaller in size, thinner in thickness and lighter in weight. In order to respond to such a demand, a laminate film formed by laminating aluminum foil and synthetic resin film together, aluminum, synthetic resin, and the like have been used as a material of the housing of a battery pack. Using a housing made of these materials can reduce the thickness of the housing and decrease the weight of the battery pack. However, when exposed to a high temperature of several hundred degrees centigrade, the synthetic resin melts and may be burned. Further, the aluminum melts and may burn the flammable matters in the vicinity thereof.

In order to improve the safety of battery packs containing lithium ion secondary batteries, various proposals have been suggested with regard to a mechanism for preventing or suppressing the heat generation, a mechanism for arresting the leakage of the contents from the lithium ion secondary batteries, and the like.

For example, one proposal suggests a battery pack containing a lithium ion secondary battery and a filter member, wherein a gas vent hole is provided in the vicinity of the filter member (see, e.g., Patent Literature 1). The filter member absorbs gas burst from the interior of the lithium ion secondary battery and discharges a nonflammable gas in the event of overcharging or other events. However, since the filter member is made of activated carbon, nanofibers, and the like, it is difficult to arrest the leakage of the contents heated to high temperature from the lithium ion secondary battery. By merely making the gas nonflammable as in Patent Literature 1, the safety of the battery pack cannot be sufficiently improved.

Another proposal suggests arranging a liquid-absorbing sheet composed of a liquid-absorbing resin layer in the interior of the battery pack (see, e.g., Patent Literature 2). However, this liquid-absorbing sheet is for absorbing the non-aqueous electrolyte that has leaked from the lithium ion secondary battery due to a sealing failure, an application of excessive stress from outside, and the like. This liquid-absorbing sheet is made of synthetic resin and, as in the case of Patent Literature 1, cannot arrest the leakage of the high-temperature contents. Even when a liquid-absorbing sheet is provided in the interior of the battery pack as described above, since the liquid-absorbing sheet is flammable, the liquid-absorbing sheet may be burned by the high-temperature contents.

Yet another proposal suggests a battery pack including a battery module, a housing, a battery module-fixing table and a liquid receiving tray (see, e.g., Patent Literature 3). The battery module is composed of a plurality of batteries connected together. The housing accommodates the battery module. The battery module-fixing table secures the battery module to the housing. The battery module, the housing, and the battery module-fixing table are arranged above the liquid receiving tray. The liquid receiving tray is a member for preventing the non-aqueous electrolyte that has leaked from the batteries constituting the battery module from leaking out of the battery pack. The liquid receiving tray has a plan shape larger than the plan projection profile of the battery module.

The liquid receiving tray of Patent Literature 3 is disposed outside the housing and has a side wall having a height smaller than the thickness of the battery module. If the contents of the battery are heated to high temperature and leak out in the event of overcharging, internal short circuiting or other events, the contents of the battery, the amount of which is larger than that of the non-aqueous electrolyte, may overflow from the liquid receiving tray. Because of this, it is impossible to sufficiently prevent the contents of the battery from being brought into contact with the flammable matters present around the battery pack. As such, the occurrence of troubles such as smoking cannot be prevented. In Patent Literature 3, the liquid receiving tray is utilized simply for the purpose of preventing the leakage of the non-aqueous electrolyte from the battery pack.

### [Citation List]

### [Patent Literature]

[PTL 1] Japanese Laid-Open Patent Publication No. 2006-228610
[PTL 2] Japanese Laid-Open Patent Publication No. 2004-311387
[PTL 3] Japanese Laid-Open Patent Publication No. 2007-328926

### [Summary of Invention]

### [Technical Problem]

The present invention intends to provide a highly safe battery pack including a lithium ion secondary battery containing an alloy-based negative electrode active material, the battery pack being characterized in that, even if the high-temperature contents leak out of the lithium ion secondary battery in the event of internal short circuiting, overcharging, or other events, troubles such as smoking hardly occur.

### [Solution to Problem]

The present inventors have carried out intensive studies in order to solve the above-discussed problems. In the course of the studies, the present inventors have directed their attentions to the fact that a lithium ion secondary battery containing an alloy-based negative electrode active material, because of its high capacity and high output power, is capable of having a sufficient capacity and a sufficient output power even when the thickness thereof is reduced. The present inventors have directed their attentions also to the fact that, if the contents of the lithium ion secondary battery having a reduced thickness melt and leak out, the amount of the leaked contents is comparatively small. The present inventors have eventually found a configuration in which a tray with a lithium ion secondary battery mounted thereon is accommodated in a housing of a battery pack.

According to this configuration, even if the high-temperature contents leak from the lithium ion secondary battery, the leaked contents are received and retained in the tray. This prevents the contact of the contents with the housing of the battery pack, the leakage of the contents out of the battery pack, and the like, remarkably reducing the possibility of smoking and other troubles. Further, by suitably selecting the structure, material, and dimensions of the tray, the demand to reduce the thickness of the battery pack can be satisfied, and at the same time, the overall mechanical strength of the battery pack can be enhanced. As a result, it is possible to provide a battery pack that is unlikely to be broken or malfunctioned even if an excessive stress is applied thereto from outside due to dropping, impacting, and the like.

Specifically, the present invention provides a battery pack including: a plurality of lithium ion secondary batteries electrically connected together in series, in parallel, or in series-parallel combination; a tray; and a housing. In the battery pack of the present invention, the lithium ion secondary batteries each include an electrode assembly containing an alloy-based negative electrode active material serving as a negative electrode active material, and each have a sealed surface. The tray includes a battery-mounting portion and a side wall, the battery-mounting portion having the lithium ion secondary battery mounted thereon, and the side wall being formed so as to stand perpendicular to the battery-mounting portion from the edge of the battery-mounting portion and having a height larger than the thickness of the lithium ion secondary battery. The housing accommodates the tray with the plurality of lithium ion secondary batteries mounted thereon.

It is preferable that the lithium ion secondary battery is arranged so as to face a peripheral portion of the housing.
In the case where the electrode assembly is a wound electrode assembly having a winding axis, it is preferable that the sealed surface of the lithium ion secondary battery and the winding axis of the wound electrode assembly are orthogonal to each other.
It is preferable that the housing is provided with a gas discharge means at the peripheral portion thereof in a vicinity of the sealed surface of the lithium ion secondary battery.

In the battery pack according to another embodiment of the present invention, it is preferable that the number of the lithium ion secondary batteries is equal to the number of the trays, and the lithium ion secondary batteries are mounted one by one on the trays.
It is more preferable that a partition member is provided between one of the trays and another one of the trays adjacent thereto.

It is preferable that the alloy-based negative electrode active material is at least one selected from the group consisting of an alloy-based negative electrode active material containing silicon and an alloy-based negative electrode active material containing tin.
It is preferable that the alloy-based negative electrode active material containing silicon is at least one selected from the group consisting of silicon, a silicon oxide, a silicon nitride, a silicon-containing alloy, and a silicon compound.
It is preferable that the alloy-based negative electrode active material containing tin is at least one selected from the group consisting of tin, a tin oxide, a tin-containing alloy, and a tin compound.

### [Advantageous Effects of Invention]

The battery pack of the present invention is highly unlikely to emit smoke or catch fire even if the high-temperature contents leak out of the lithium ion secondary batteries, and therefore is very highly safe for the users. In addition, since the battery pack of the present invention has a high mechanical strength (rigidity), even if an excessive stress is applied thereto from outside, the lithium ion secondary batteries accommodated therein are highly unlikely to be damaged. As such, the battery pack of the present invention is particularly useful, for example, as a power source of portable electronic devices which may be dropped or impacted with high probability while being carried.

### [Brief Description of Drawings]

[Fig. 1] A simplified longitudinal cross-sectional view showing a configuration of a battery pack according to one embodiment of the present invention.
[Fig. 2] A top view of the battery pack shown in Fig.1.
[Fig. 3] A simplified longitudinal cross-sectional view showing a configuration of a battery pack according to another embodiment of the present invention.
[Fig. 4] Atop view of the battery pack shown in Fig. 3.
[Fig. 5] A simplified longitudinal cross-sectional view showing a configuration of a battery pack according to yet another embodiment of the present invention.
[Fig. 6] A longitudinal cross-sectional view schematically showing a configuration of a negative electrode included in a lithium ion secondary battery used in the present invention.
[Fig. 7] A perspective view schematically showing a negative electrode current collector included in the negative electrode shown in Fig. 6.
[Fig. 8] A longitudinal cross-sectional view schematically showing a configuration of a column included in a negative electrode active material layer in the negative electrode shown in Fig. 6.
[Fig. 9] A side view schematically showing a configuration of an electron beam vapor deposition apparatus.
[Fig. 10] A side view schematically showing a configuration of another type of vapor deposition apparatus.
[Fig. 11] A series of longitudinal cross-sectional views illustrating a method of forming a negative electrode active material layer using the vapor deposition apparatus shown in Fig. 10.

### [Description of Embodiments]

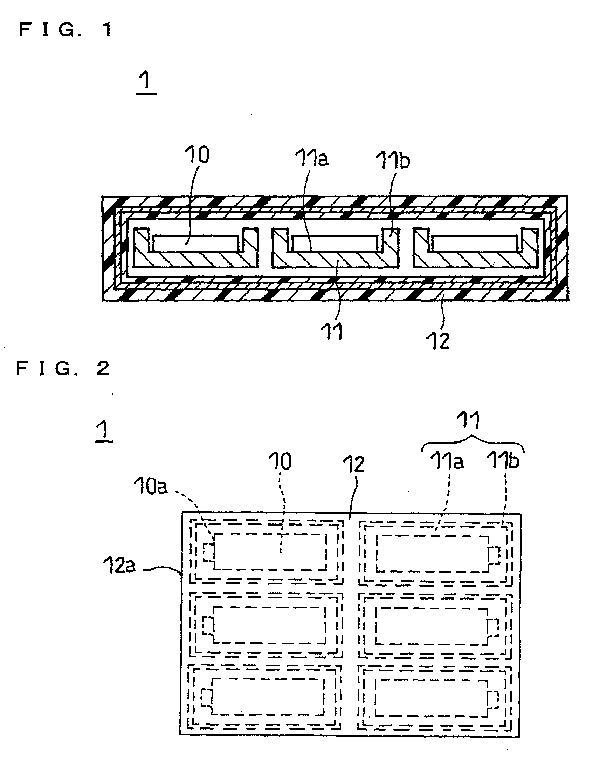

Fig. 1 is a simplified longitudinal cross-sectional view showing a configuration of a battery pack 1 according to one embodiment of the present invention. Fig. 2 is a top view of the battery pack 1 shown in Fig. 1. The battery pack 1 includes a lithium ion secondary battery 10, a tray 11 and a housing 12.

The trays 11 are six in number and are arranged on the same plane in the interior of the housing 12. The tray 11 includes a battery-mounting portion 11a and a side wall 11b. On the surface of the battery-mounting portion 11 a, the lithium ion secondary battery 10 is mounted. In this embodiment, one lithium ion secondary battery 10 is mounted on one tray 11. The side wall 11b is formed so as to stand perpendicular to the battery-mounting portion 11 a from the entire edge of the battery-mounting portion 11a. The height of the side wall 11b (i.e., the length of the side wall 11b in the vertical direction) is larger than the thickness of the lithium ion secondary battery 10. To be more accurate, the height of the side wall 11b means a distance from the surface of the battery-mounting portion 11a to the top end of the side wall 11b in the direction perpendicular to the battery-mounting portion 11a. The side wall 11b may be inclined with respect to the direction perpendicular to the battery-mounting portion 11a.

The lithium ion secondary batteries 10 are six in number and are mounted one by one on six trays 11. The six lithium ion secondary batteries 10 are connected in series. The lithium ion secondary battery 10 has a sealed surface 10a and is arranged on the tray 11 so as to face a peripheral portion 12a of the housing 12.

Although six trays 11 and six lithium ion secondary batteries 10 are accommodated in the battery pack 1 in this embodiment, the number is not limited thereto and any number of the lithium ion secondary batteries 10 may be accommodated as long as it is two or more. Further, although six lithium ion secondary batteries 10 are connected in series in this embodiment, the connection is not limited thereto and the lithium ion secondary batteries 10 may be connected together in parallel or in series-parallel combination.

The lithium ion secondary battery 10 is a thin prismatic battery, and includes a wound electrode assembly, a positive electrode lead, a negative electrode lead, a battery case, and a non-aqueous electrolyte, although these are not shown in the figure. One end of the battery case in the longitudinal direction thereof is open. By sealing this open end, the sealed surface 10a is formed.

The wound electrode assembly is formed, for example, by winding a positive electrode and a negative electrode with a separator interposed therebetween. The center of the axis of the wound electrode assembly in the longitudinal direction thereof coincides with the winding axis. The wound electrode assembly is housed in the battery case preferably such that the winding axis thereof is substantially perpendicular to the sealed surface 10a. The contents of the battery 10 often leak out through the sealed surface 10a in the event of internal short circuiting, overcharging or other events. Since the wound electrode assembly is housed in the battery case as described above, the pressure produced when the contents are to leak out of the battery case is suppressed in such events, and the spouting of the contents can be prevented.

The number of winding in the wound battery assembly is not particularly limited, but is preferably 2 to 100. The number of winding can be adjusted to a desired numeric value by suitably selecting the dimensions (particularly, the thickness) of the battery case, the thickness of the active material layer, and the like. The number of winding is a number of electrodes present between the winding axis and the outermost circumference of a wound electrode assembly in the cross section of the wound electrode assembly taken in the direction perpendicular to the winding axis thereof. The electrode is a stack consisting of one positive electrode, one separator, and one negative electrode. In the wound electrode assembly, a separator is present between adjacent electrodes. The number of winding increases by 0.5 every half winding. More specifically, when the electrode is wound two times, the number of winding is 2; and when the electrode is wound two times plus half a time, the number of winding is 2.5. Likewise, the number of winding is determined according to the number of times that the electrode is wound.

The positive electrode includes a positive electrode current collector and a positive electrode active material layer. For the positive electrode current collector, any material commonly used in this field may be used, examples of which include a porous or non-porous conductive substrate made of a metal material such as stainless steel, titanium, aluminum, and an aluminum alloy, or of a conductive resin. The porous conductive substrate is exemplified by a mesh material, a net material, a punched sheet, a lath material, a porous material, a foam, and a fiber bundle (e.g., nonwoven fabric), and the like. The non-porous conductive substrate is exemplified by foil, sheet, film, and the like. The thickness of the conductive substrate, although not particularly limited thereto, is usually 1 to 500 µm, and is preferably 1 to 50 µm, further preferably 10 to 40 µm and particularly preferably 10 to 30 µm.

The positive electrode active material layer is provided on one or both surfaces of the positive electrode current collector in the thickness direction thereof, and includes a positive electrode active material capable of absorbing and desorbing lithium ions. Further, the positive electrode active material layer may include a conductive agent, a binder, and the like in addition to the positive electrode active material.

For the positive electrode active material, any material commonly used in this field may be used, examples of which include a lithium-containing composite metal oxide, an olivine type lithium salt, a chalcogen compound, and manganese dioxide.
The lithium-containing composite metal oxide is a metal oxide containing lithium and a transition metal or a metal oxide in which part of the transition metal in the foregoing metal oxide is replaced with a different element. Examples of the different element include Na, Mg, Sc, Y, Mn, Fe, Co, Ni, Cu, Zn, Al, Cr, Pb, Sb, and B, among which Mn, Al, Co, Ni, Mg, and the like are preferred. In the case where the different element is a transition metal, the different element is a transition metal other than the transition metal included in the foregoing metal oxide. One or two or more different elements may be used.

Among these positive active materials as listed above, a lithium-containing composite metal oxide is preferably used. Examples of the lithium-containing composite metal oxide include LiₓCoO₂, LiₓNiO₂, LiₓMnO₂, LiₓCo_{y}Ni_{1-y}O₂, LiₓCo_{y}M_{1-y}O_{z}, LiₓNi_{1-y}M_{y}O_{z}, LiₓMn₂O₄, and Li_{X}Mn_{2-y}MyO₄, where M is at least one selected from the group consisting of Na, Mg, Sc, Y, Mn, Fe, Co, Ni, Cu, Zn, Al, Cr, Pb, Sb, V, and B, 0 < x ≤ 1.2, y = 0 to 0.9, and z = 2.0 to 2.3. The value x representing the molar ratio of lithium increases or decreases as charging and discharging are repeated. Examples of the olivine type lithium salt include LiMPO₄ and Li₂MPO₄F, where M is the same as above. Among the elements listed above as M, Fe is preferred. Examples of the chalcogen compound include titanium disulfide and molybdenum disulfide. These positive electrode active materials may be used alone or in combination of two or more.

For the conductive agent, any material commonly used in this field may be used, examples of which include graphites such as natural graphite and artificial graphite; carbon blacks such as acetylene black, Ketjen black, channel black, furnace black, lamp black, and thermal black; conductive fibers such as carbon fiber and metal fiber; fluorinated carbon; powder of metals such aluminum; conductive whiskers such as zinc oxide whisker and potassium titanate whisker; conductive metal oxides such as titanium oxide; and organic conductive materials such as a phenylene derivative. These conductive agents may be used alone or in combination of two or more.

For the binder, any material commonly used in this field may be used, examples of which include polyvinylidene fluoride (PVDF), polytetrafluoroethylene, polyethylene, polypropylene, polyamide, polyimide, polyamide-imide, polyacrylonitrile, polyacrylic acid, polymethyl acrylate, polyethyl acrylate, polyhexyl acrylate, polymethacrylic acid, polymethyl methacrylate, polyethyl methacrylate, polyhexyl methacrylate, polyvinyl acetate, polyvinylpyrrolidone, polyether, polyether sulfone, polyhexafluoropropylene, styrene-butadiene rubber, modified acrylic rubber, and carboxymethyl cellulose.

Alternatively, for the binder, a copolymer containing two or more monomer compounds may be used. Examples of the monomer compound include tetrafluoroethylene, hexafluoropropylene, perfluoroalkylvinylether, vinylidene fluoride, chlorotrifluoroethylene, ethylene, propylene, pentafluoropropylene, fluoromethylvinylether, acrylic acid, and hexadiene.
These binders may be used alone or in combination of two or more.

The positive electrode active material layer can be formed, for example, by applying a positive electrode material mixture slurry on the surface of the positive electrode current collector, and drying the slurry, followed by rolling as needed. The positive electrode material mixture slurry can be prepared by dissolving or dispersing a positive electrode active material, and as needed, a conductive agent, a binder, and the like in an organic solvent. For the organic solvent, for example, dimethylformamide, dimethylacetamide, methylformamide, N-methyl-2-pyrrolidone (NMP), dimethylamine, acetone, and cyclohexanone may be used.

When the positive electrode material mixture slurry includes a positive electrode active material, a conductive agent, and a binder, the ratio among these three components is not particularly limited. Preferably, the positive electrode active material is 80 to 98% by weight, the conductive agent is 1 to 10% by weight, and the binder is 1 to 10% by weight relative to the total amount of these three components, and the ratio among these components may be selected suitably from these ranges so that the total amount becomes 100% by weight. The thickness of the positive electrode active material layer is suitably selected according to various conditions. For example, when the positive electrode active material layer is to be provided on both surfaces of the positive electrode current collector, the total thickness of the positive electrode active material layers is preferably about 30 to 100 µm.

The negative electrode includes a negative electrode current collector and a negative electrode active material layer.
For the negative electrode current collector, any material commonly used in this field may be used, examples of which include a porous or non-porous conductive substrate made of a metal material such as stainless steel, nickel, copper, and a copper alloy, or of a conductive resin. The porous conductive substrate is exemplified by a mesh material, a net material, a punched sheet, a lath material, a porous material, a foam, and a fibrous compact (e.g., nonwoven fabric), and the like. The non-porous conductive substrate is exemplified by foil, sheet, film, and the like. The thickness of the porous or non-porous conductive substrate is usually 1 to 500 µm, and is preferably 1 to 50 µm, further preferably 10 to 40 µm and particularly preferably 10 to 30 µm, although not particularly limited thereto.

The negative electrode active material layer includes an alloy-based negative electrode active material. The alloy-based negative electrode active material is a material capable of absorbing lithium by alloying with lithium and reversibly absorbing and desorbing lithium at a negative electrode potential. The alloy-based negative electrode active material has a capacity at least several times as large as that of a conventionally used carbon material. For this reason, using such an alloy-based negative electrode active material can reduce the size and the thickness of the battery pack 1 itself even when a configuration in which the lithium ion secondary battery 10 is mounted on the tray 11 and these are accommodated in the housing 12 is employed. As a result, it is possible to obtain the battery pack 1 applicable to portable electronic devices with reduced thicknesses.

In contrast, when a conventional carbon material that have been widely used as the negative electrode active material is used, in order to achieve a high output power, the thickness of the negative electrode active material layer must be larger than that of the negative electrode active material layer including an alloy-based negative electrode active material. Accordingly, the lithium ion secondary battery 10 needs to have a certain degree of thickness. Consequently, when a configuration in which the lithium ion secondary battery 10 is mounted on the tray 11 is employed, it may be impossible to obtain the battery pack 1 applicable to portable electronic devices with reduced thicknesses.

The alloy-based negative electrode active material has a higher ability of absorbing and desorbing lithium than a carbon material, but has a lower electric conductivity than a carbon material. This is an advantage in that, even if an internal short circuit occurs, since the flow of current through the negative electrode active material layer including an alloy-based negative electrode active material is comparatively slow, the internal short circuit can be inhibited from spreading. Another advantage is in that, by using the alloy-based negative electrode active material, it is possible to obtain the battery pack 1 having a high capacity and a high output power that are higher than the conventional ones.

For the alloy-based negative electrode active material, any known material may be used, among which an alloy-based negative electrode active material containing silicon and an alloy-based negative electrode active material containing tin are preferred. Examples of the alloy-based negative electrode active material containing silicon include silicon, a silicon oxide, a silicon nitride, a silicon-containing alloy, and a silicon compound. Examples of the alloy-based negative electrode active material containing tin include tin, a tin oxide, a tin-containing alloy, and a tin compound. These alloy-based negative electrode active materials containing silicon may be used alone or in combination of two or more, and these alloy-based negative electrode active materials containing tin may be used alone or in combination of two or more.

Examples of the silicon oxide include silicon oxide represented by the composition formula: SiOₐ, where 0.05 < a < 1.95. Examples of the silicon nitride include silicon nitride represented by the composition formula: SiN_{b}, where 0 < b < 4/3. Examples of the silicon alloy include an alloy containing silicon and one or two or more elements selected from the group consisting of Fe, Co, Sb, Bi, Pb, Ni, Cu, Zn, Ge, In, Sn, and Ti. Examples of the silicon compound include a compound in which part of silicon or part of silicon contained in a silicon oxide, a silicon nitride, or a silicon-containing alloy is replaced with one or two or more elements selected from the group consisting of B, Mg, Ni, Ti, Mo, Co, Ca, Cr, Cu, Fe, Mn, Nb, Ta, V, W, Zn, C, N, and Sn.

Examples of the tin oxide include SnO₂ and tin oxide represented by the composition formula: SnO_{d}, where 0 < d < 2. Examples of the tin-containing alloy include a Ni-Sn alloy, a Mg-Sn alloy, a Fe-Sn alloy, a Cu-Sn alloy, and a Ti-Sn alloy. Examples of the tin compound include SnSiO₃, Ni₂Sn₄, and Mg₂Sn.
Preferred among these are silicon, tin, the silicon oxide, the tin oxide, and particularly preferred are silicon and the silicon oxide. These alloy-based negative electrode active materials may be used alone or in combination of two or more.

The negative electrode active material layer can be formed on the surface of the negative electrode current collector, for example, according to a known thin-film forming method such as sputtering, vapor deposition, and chemical vapor deposition (CVD). The negative electrode active material layer formed by these methods contains the alloy-based negative electrode active material in a ratio of almost 100%, which makes it possible to achieve a higher capacity and a higher output power. Further, the negative electrode active material layer formed by these thin-film forming methods has a thickness smaller than the conventional one, which makes it possible, for example, to be more easily respond to the demand to reduce the size and thickness of portable electronic devices. For this reason, in the present invention, the negative electrode active material layer is preferably formed by sputtering, vapor deposition, chemical vapor deposition (CVD), and the like.

The thickness of the negative electrode active material layer is usually 3 to 100 µm, and is preferably 3 to 30 µm and more preferably 5 to 20 µm. By setting the thickness of the negative electrode active material layer within the foregoing ranges, a reduction in the thickness of the lithium ion secondary battery 10 and thus the thickness of the battery pack 1 and a higher output power of the lithium ion secondary battery 10 can be achieved at the same time at a high level. When the thickness of the negative electrode active material layer is smaller than 3 µm, the effect of inhibiting the spread of the internal short circuit may become insufficient, and the achievement of a higher output power of the lithium ion secondary battery 10 may become impossible. When the thickness of the negative electrode active material layer exceeds 100 µm, the thickness of the battery pack 1 may not be sufficiently reduced.

A lithium metal layer may be further formed on the surface of the negative electrode active material layer. Here, the amount of lithium metal may be an amount equivalent to the irreversible capacity stored in the negative electrode active material layer during the initial charging/discharging. The lithium metal layer can be formed, for example, by vapor deposition.

The separator is disposed so as to be sandwiched between the positive electrode and the negative electrode. For the separator, a sheet or film separator having a predetermined degree of ion permeability, mechanical strength, insulating property, and other properties may be used. For the separator, for example, a porous sheet or a porous film, such as a microporous film, a woven fabric, and a non-woven fabric may be used. The microporous film may be of a single-layer film or of a multi-layer film (a composite film). The single-layer film is made of one material. The multi-layer film (the composite film) is a laminate of single-layer films made of one material or a laminate of single-layer films made of different materials. Two or more layers of microporous film, woven fabric, non-woven fabric, and the like may be laminated together to form the separator.

For the material of the separator, various plastic materials may be used. In view of durability, shutdown function, battery safety, and other factors, polyolefin such as polyethylene and polypropylene is preferred. Here, the shutdown function is a function that works when the battery temperature is abnormally elevated, in such a way that the pores extending through the separator in the thickness direction thereof are dosed to interrupt the movement of ions, thereby to shut down the battery reaction.

The thickness of the separator is generally 10 to 300 µm, and is preferably 10 to 40 µm, more preferably 10 to 30 µm and more preferably 10 to 25 µm. The porosity of the separator is preferably 20 to 70% and more preferably 30 to 60%. Here, the porosity is a ratio of the total volume of pores present in the separator to the volume of the separator.

One end of the positive electrode lead is connected to the positive electrode current collector, and the other end thereof is guided outside the lithium ion secondary battery 10 through the opening of the battery case. The positive electrode lead may be made of any material commonly used in this field, such as aluminum. One end of the negative electrode lead is connected to the negative electrode current collector, and the other end thereof is guided outside the lithium ion secondary battery 10 through the opening of the battery case. The negative electrode lead may be made of any material commonly used in this field, for example, nickel.

The battery case is a prismatic container having a substantially rectangular prismatic shape, and has an opening at one end in the longitudinal direction thereof, the opening through which the electrode assembly, the non-aqueous electrolyte, and the like are housed therein. This opening is sealed after the wound electrode assembly, the non-aqueous electrolyte, and the like are housed in the battery case and the positive electrode lead and negative electrode lead are guided outside the battery case through the opening, to be formed into the sealed surface 10a. The opening may be sealed by welding the opening end of the battery case or sealed by welding the opening end of the battery case with a synthetic resin-made sealing member such as a gasket interposed therebetween. The sealing member may be made of a plastic material containing a flame retardant. Examples of the flame retardant include a halogen-based organic flame retardant, a phosphorus-based organic flame retardant, a metal hydroxide-based inorganic flame retardant, a metal oxide-based inorganic flame retardant, and an antimony-based inorganic flame retardant. The sealed surface 10a may be provided with a known gas vent mechanism.

The battery case may be, for example, a battery case made of a metal material, synthetic resin, laminate film, and the like. Examples of the metal material include aluminum, magnesium, titanium, and an alloy of these metals. In view of the heat resistance, the moldability, and other properties, the synthetic resin is preferably fluorocarbon resin, ABS resin, polycarbonate, polyethylene terephthalate, and the like, although not particularly limited thereto. For the laminate film, any material commonly used in this field may be used, for example, a laminate of a metal film such as a metal foil with a resin film may be used.

Examples of the laminate include a laminate film of acid-modified polypropylene/polyethylene terephthalate (PET)/Al foil/PET, a laminate film of acid-modified polypropylene/polyamide/Al foil/PET, a laminate film of ionomer resin/Ni foil/polyethylene/PET, a laminate film of ethylene vinyl acetate/polyethylene/Al foil/PET, and a laminate film of ionomer resin/PET/ Al foil/PET.

The non-aqueous electrolyte is an electrolyte having a lithium-ion conductivity, and is mainly impregnated in the electrode assembly. There are several types of non-aqueous electrolyte, such as a liquid non-aqueous electrolyte, a gelled non-aqueous electrolyte, and a solid electrolyte (e.g., a polymer solid electrolyte).
The liquid non-aqueous electrolyte contains a solute (supporting salt) and a non-aqueous solvent, and further contains various additives as needed. The solute is generally dissolved in a non-aqueous solvent.

For the solute, any material commonly used in this field may be used, examples of which include LiClO₄, LiBF₄, LiPF₆, LiAlCl₄, LiSbF₆, LiSCN, LiCF₃SO₃, LiCF₃CO₃, LiAsF₆, LiB₁₀Cl₁₀, lithium lower aliphatic carboxylate, LiCl, LiBr, Lil, LiBCl₄, borates, and imide salts.

Examples of the borates include lithium bis(1,2-benzenediolate(2-)-O,O') borate, lithium bis(2,3-naphthalenediolate(2-)-O,O') borate, lithium bis(2,2'-biphenyldiolate(2-)-O,O') borate, and lithium bis(5-fluoro-2-olate-1-benzenesulfonate-O,O') borate.

Examples of the imide salts include bis(trifluoromethanesulfonyl)imide lithium ((CF₃SO₂)₂NLi), trifluoromethanesulfonyl nonafluorobutane sulfonyl imide lithium ((CF₃SO₂)(C₄F₉SO₂)NLi), and bis(pentafluoroethanesulfonyl)imide lithium ((C₂F₅SO₂)₂NLi). These solutes may be used alone or in combination of two or more.
The amount of the solute to be dissolved in the non-aqueous solvent is preferably in the range of 0.5 to 2 mol/L.

For the non-aqueous solvent, any material commonly used in this field may be used, examples of which include a cyclic carbonic acid ester, a chain carbonic acid ester, and a cyclic carboxylic add ester. Examples of the cyclic carbonic acid ester include propylene carbonate (PC) and ethylene carbonate (EC). Examples of the chain carbonic acid ester include diethyl carbonate (DEC), ethyl methyl carbonate (EMC), and dimethyl carbonate (DMC). Examples of the cyclic carboxylic acid ester include γ-butyrolactone (GBL) and γ-valerolactone (GVL). These non-aqueous solvents may be used alone or in combination of two or more.

For the additive, for example, a material for improving the charge/discharge efficiency, a material for inactivating a battery, and the like may be used. The material for improving the charge/discharge efficiency, for example, decomposes on the negative electrode and forms a coating with a high lithium-ion conductivity, thereby to improve the charge/discharge efficiency. Examples of such a material include vinylene carbonate (VC), fluoroethylene carbonate (FEC), 4-methylvinylene carbonate, 4,5-dimethylvinylene carbonate, 4-ethylvinylene carbonate, 4,5-diethylvinylene carbonate, 4-propylvinylene carbonate, 4,5-dipropylvinylene carbonate, 4-phenylvinylene carbonate, 4,5-diphenylvinylene carbonate, vinyl ethylene carbonate (VEC), and divinyl ethylene carbonate. These may be used alone or in combination of two or more. Among these, at least one selected from the group consisting of vinylene carbonate, vinyl ethylene carbonate, and divinyl ethylene carbonate is preferred. In the above compounds, some of the hydrogen atoms therein may be replaced with fluorine atoms.

The material for inactivating a battery, for example, decomposes when the battery is overcharged and forms a coating on the electrode surface, thereby to inactivate the battery. Such a material may be, for example, a benzene derivative. The benzene derivative may be, for example, a benzene compound having a phenyl group and a cyclic compound group adjacent to the phenyl group. Preferred examples of the cyclic compound group are a phenyl group, a cyclic ether group, a cyclic ester group, a cycloalkyl group, and a phenoxy group, and the like. Examples of the benzene derivative include cyclohexylbenzene, biphenyl, and diphenylether. These benzene derivatives may be used alone or in combination of two or more. Here, the amount of benzene derivative contained in the liquid non-aqueous electrolyte is preferably 10 parts by volume or less per 100 parts by volume of the non-aqueous solvent.

The gelled non-aqueous electrolyte contains a liquid non-aqueous electrolyte and a polymer material for retaining the liquid non-aqueous electrolyte. The polymer material used here is capable of gelling a liquid material. For the polymer material, any material commonly used in this field may be used, examples of which include, polyvinylidene fluoride, a copolymer of polyvinylidene fluoride and hexafluoropropylene, polyacrylonitrile, polyethylene oxide, polyvinyl chloride, and polyacrylate.

The solid electrolyte contains, for example, a solute (supporting salt) and a polymer material. Examples of the solute are the same as listed above. Examples of the polymer material include polyethylene oxide (PEO), polypropylene oxide (PPO), and a copolymer of ethylene oxide and propylene oxide.

The lithium ion secondary battery 10 can be fabricated, for example, in the manner as described below.
After a wound electrode assembly is formed, one end of a positive electrode lead is connected to the positive electrode current collector of the positive electrode, and one end of a negative electrode lead is connected to the negative electrode current collector of the negative electrode. This electrode assembly is inserted into a battery case through the opening of the battery case, and the other ends of the positive and negative electrode leads are guided outside the battery case. A non-aqueous electrolyte is injected into the battery case. Subsequently, while the pressure in the battery case is reduced to vacuum, the opening of the battery case is dosed by welding with a gasket interposed therebetween, In such a manner, the lithium ion secondary battery 10 having the sealed surface 10a is obtained.

The tray 11 includes a battery-mounting portion 11a and a side wall 11b. The tray 11 is accommodated together with the lithium ion secondary battery 10 in the interior of the housing 12, and located vertically below the lithium ion secondary battery 10 while the battery is in use. Since the tray 10 is provided, even if the high-temperature contents leak out of the lithium ion secondary battery 10, the leaked contents are received and retained in the tray 11. This prevents the contact of the high-temperature contents with the housing 12, the leakage of the high-temperature contents out of the battery pack 1, and the like. As a result, the occurrence of smoking and other troubles can be prevented. Further, the mechanical strength of the battery pack 1 can be enhanced. As such, even if an excessive stress is applied to the battery pack from outside due to the dropping of a portable electronic device or other reasons, the lithium ion secondary battery 10 accommodated in the interior thereof will not be damaged.

The tray 11 is made such that the lithium ion secondary battery 10 having predetermined dimensions can be housed in a space defined by the surface of the battery-mounting portion 11 a and the inner wall surface of the side wall 11 b. The volume of the foregoing space is larger than the volume of the lithium ion secondary battery 10. Preferably, the volume of the foregoing space is adjusted to be 1.5 to 3 times as large as the volume of the lithium ion secondary battery 10. As such, the contents of the lithium ion secondary battery 10, if heated to high temperature and expanded, are reliably prevented from leaking out of the tray 11 and coming to contact with the housing 12.

The lithium ion secondary battery 10 is mounted on the surface of the battery-mounting portion 11a of the tray 11. The lithium ion secondary battery 10 may be fixed to the battery-mounting portion 11 a with an adhesive and the like, if necessary. Alternatively, a depression having a shape conforming to the shape of the lithium ion secondary battery 10 may be formed on the surface of the battery-mounting portion 11a, and the lithium ion secondary battery 10 may be mounted on the depression.

The side wall 11b is formed so as to stand perpendicular to the battery-mounting portion 11a from the entire edge of the battery-mounting portion 11a. Preferably, the side wall 11b is formed substantially perpendicular to the battery-mounting portion 11a. The side wall 11b (i.e., the length of the side wall 11b in the direction perpendicular to the battery-mounting portion 11a) is formed so as to have a height larger than the thickness of the lithium ion secondary battery 10. As such, even if the contents leak out of the lithium ion secondary battery 10, it is possible to more reliably prevent the leaked contents from coming to contact with the housing 12. Alternatively, the side wall 11a may be formed such that the inner wall surface of the side wall 11b and the battery-mounting portion 11a form an angle therebetween of greater than 90°.

The side wall 11b is provided with a hole (not shown) for passing a lead wire for connecting six lithium ion secondary batteries 10 in series therethrough. Even in the case where the diameter of the hole is slightly larger than that of the lead wire, the contents of the lithium ion secondary battery, because of their comparatively high viscosity, will not leak out through the clearance between the hole and the lead wire. Particularly when the tray 11 is molded in one piece, it is possible to reliably prevent the contents from leaking out of the tray 11 through the hole provided for passing the lead wire therethrough.

The tray 11 is made of, for example, a metal material, a fiber reinforced plastic material, and the like. Examples of the metal material include stainless steel, titanium, a titanium alloy, iron, nickel, cobalt, tantalum, molybdenum, vanadium, and tungsten. When the tray 11 is made of a metal material, the battery-mounting portion 11a and the inner wall surface of the side wall 11b are preferably provided with a heat insulating layer. The heat insulating layer is made of a heat insulating material, and is preferably made of a heat insulating material having an electrically insulating property for preventing short circuit.

The tray 11 made of a fiber reinforced plastic material is produced, for example, in the following manner. A metal frame provided with wiring for connecting the lithium ion secondary batteries 10 together in series, in parallel, or in series-parallel combination is produced. To this metal frame, a fiber reinforced plastic material is applied and cured into a predetermined shape by molding, insert molding, and the like. In such a manner, the tray 11 is obtained. In this configuration, it is not necessary to form a hole for passing a lead wire therethrough. As such, it is possible to more reliably prevent the contents of the lithium ion secondary battery 10 from leaking out of the tray 11. The tray 11 made only of a fiber reinforced plastic material can be produced by injection molding and the like.

The surface of the tray 11 may be coated with an electrically insulating material such as a plastic film. The tray 11 is preferably fixed to the inner surface of the housing 12. For example, an adhesive, a double-sided tape, or the like is used to fix the tray 11.

The housing 12 may be a housing similar to that as used for the conventional battery packs. The housing 12 is made of a metal material, a laminate film, a plastic material, and the like, similar to those for the battery case as listed above. For the plastic material, other than those for the battery case as listed above, a thermoplastic resin such as polypropylene and polyethylene terephthalate, a thermosetting resin such as phenol resin, and the like may be used.

To the plastic material may contain, for example, a flame retardant, a filler, and the like may be added. Examples of the flame retardant include a halogen-based organic flame retardant, a phosphorus-based organic flame retardant, a metalhydroxide-based inorganic flame retardant, and an antimony-based inorganic flame retardant. Examples of the filler include a particulate filler such as silica and talc, and a fibrous filler such as glass fiber, wollastonite, and potassium titanate fiber.
In this embodiment, the housing 12 is made of a laminate film.

The housing 12 may be provided with a gas discharge means at the peripheral portion 12a thereof in the vicinity of the sealed surface 10a of the lithium ion secondary battery 10. For the gas discharge means, a gas discharge means capable of discharging gas only to the exterior of the housing 12 is used. For example, a gas discharge means including two or more vent holes extending through the housing 12 in the thickness direction thereof may be used. When the diameters of the vent holes are sufficiently small, the vent holes can selectively allow only gas to pass therethrough. Alternatively, a gas-liquid separation membrane may be used as the gas discharge means.
On the peripheral portion 12a of the housing 12, a positive electrode terminal (not shown) and a negative electrode terminal (not shown) are exposed and are connected by wire with six lithium ion secondary batteries 10 in the interior.

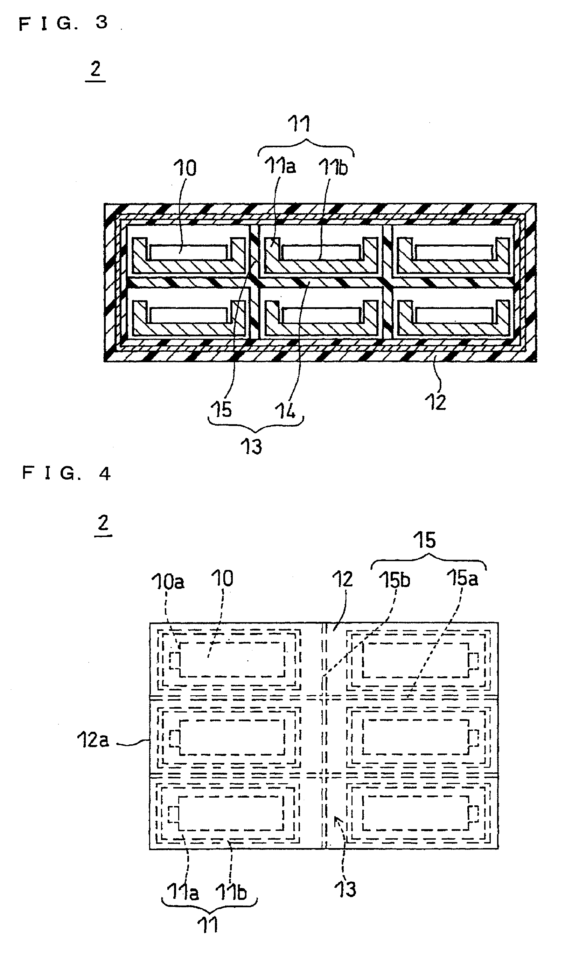

Fig. 3 is a simplified longitudinal cross-sectional view showing a configuration of a battery pack 2 according to another embodiment of the present invention. Fig. 4 is a top view of the battery pack 2 shown in Fig. 3. Since the battery pack 2 is similar to the battery pack 1, the corresponding parts are denoted by the same reference numerals and the description thereof is omitted.

The battery pack 2 includes the lithium ion secondary battery 10, the tray 11, the housing 12, and a plate-shaped partition member 13, and is characterized in that the partition member 13 (a projected portion 15) is provided between one tray 11 and another tray 11 adjacent thereto. The battery pack 2 is also characterized in that six trays 11 with the lithium ion secondary batteries 10 mounted thereon are stacked on another six trays 11 with the partition member 13 (a plate portion 14) is interposed therebetween in two tiers. Specifically, the battery pack 2 includes twelve lithium ion secondary batteries 10 and twelve trays 11.

Even if one lithium ion secondary battery 10 generates heat due to the occurrence of internal short circuit or the like, by virtue of the presence of the partition member 13, it is possible to prevent the other lithium ion secondary batteries 10 from being damaged by the generated heat and resulting in heat generation or the like. This further improves the safety of the battery pack 2.

The partition member 13 includes the plate portion 14 and the projected portion 15. The plate portion 14 is provided between vertically upper and lower trays 11. The projected portion 15 is provided so as to project from both surfaces of the plate portion 14 vertically upward and downward. The projected portion 15 includes projected strips 15a and 15b. Two projected strips 15a are provided on each of both surfaces of the plate portion 14 in the thickness direction thereof and extend in the longitudinal direction of the plate portion 14. The projected strips 15b are provided one by one on both surfaces of the plate portion 14 in the thickness direction thereof and extends in the direction perpendicular to the longitudinal direction of the plate portion 14 (i.e., in the lateral direction of the plate portion 14). The projected trips 15a and 15b intersect with each other substantially at right angle, forming an intersection that looks almost like a cross when seen from vertical above or below.

The partition member 13 is made, for example, by using a plastic material and by injection molding, cast molding, and the like. Examples of the plastic material include, without particular limitation, a thermoplastic resin such as polypropylene and polyethylene terephthalate, a thermosetting resin such as phenol resin, and the like. The plastic material may contain, for example, a flame retardant, a filler, and the like. Examples of the flame retardant include a halogen-based organic flame retardant, a phosphorus-based organic flame retardant, a metalhydroxide-based inorganic flame retardant, and an antimony-based inorganic flame retardant. Examples of the filler include a particulate filler such as silica and talc, and a fibrous filler such as glass fiber, wollastonite, and potassium titanate fiber.

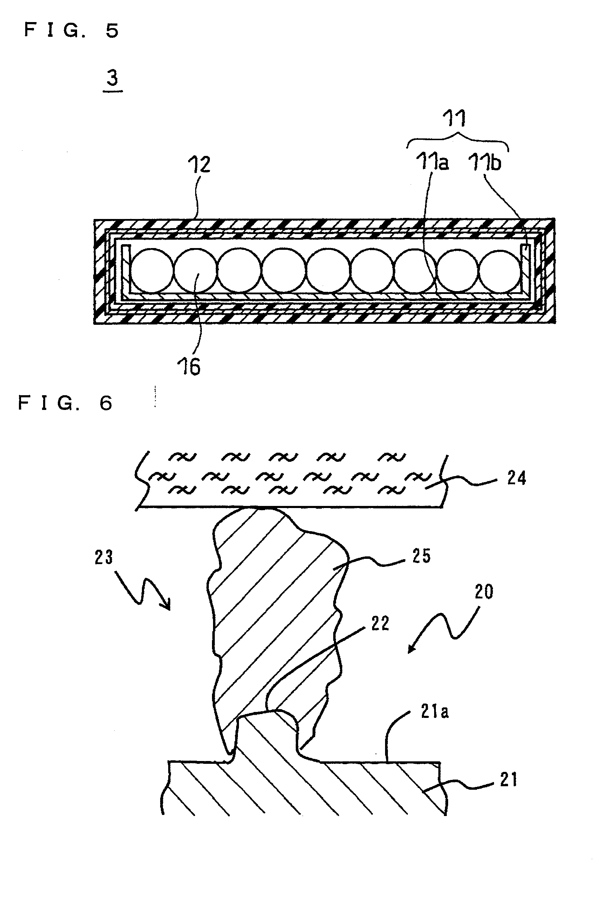

Fig. 5 is a simplified longitudinal cross-sectional view showing a configuration of a battery pack 3 according to yet another embodiment of the present invention. Since the battery pack 3 is similar to the battery pack 1, the corresponding parts are denoted by the same reference numerals and the description thereof is omitted.

The battery pack 3 includes nine cylindrical batteries 16 and is characterized in that these nine cylindrical batteries 16 are mounted on one tray 11. The cylindrical battery 16 is a lithium ion secondary battery having the same configuration as the battery 10 except that the shape of the battery case is cylindrical. The cylindrical batteries 16 are mounted on the battery-mounting portion 11a of the tray 11. The sealed surfaces of the cylindrical batteries 16 are oriented in the same direction and face one peripheral portion of the housing 12. As in this embodiment, one or two or more lithium ion secondary batteries may be mounted on the tray 11.

In the batteries 10 and 16 used in the present invention, it is preferable that the negative electrode active material layer is an aggregate of a plurality of columns. It is more preferable that a space for absorbing an expansion and contraction of the columns is provided between the columns. When the negative electrode active material layer is formed as an aggregate of a plurality of columns, it is possible to achieve both a reduction in thickness and a higher capacity of the negative electrode active material layer at a higher level. As such, even when a configuration including the tray 11 is employed, it is possible to easily reduce the thickness of the battery packs 1, 2 and 3.

The columns are formed so as to extend outward from the surface of the negative electrode current collector, and include an alloy-based negative electrode active material. A gap is present between the adjacent columns, allowing the columns to be spaced from one another. In forming a negative electrode active material layer being an aggregate of columns, it is preferable to provide the surface of the negative electrode current collector with a plurality of projections and to form columns on the surfaces of the projections.

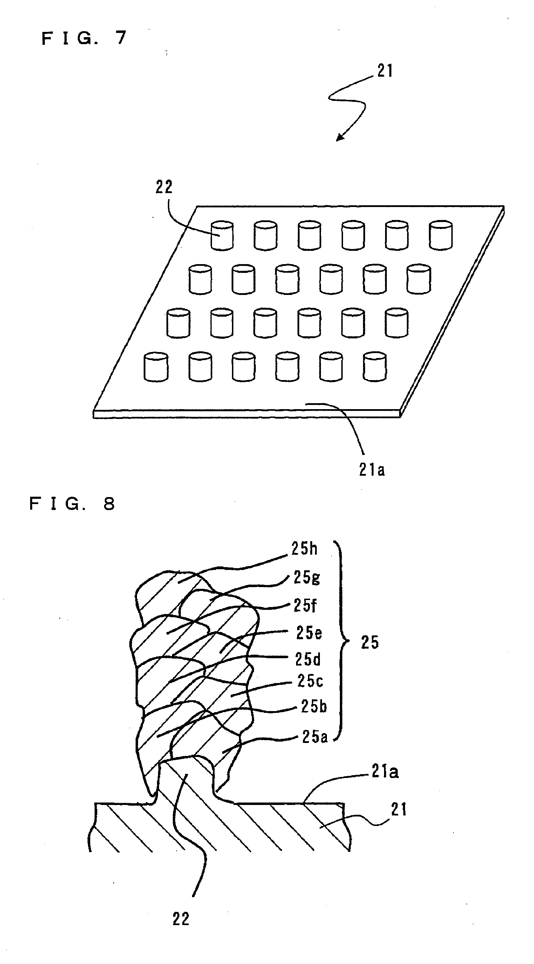

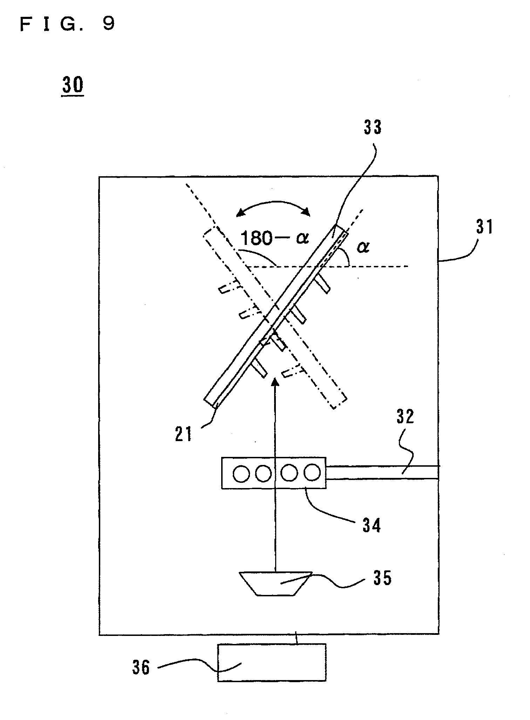

Fig. 6 is a longitudinal cross-sectional view schematically showing a configuration of a negative electrode 20 used in the present invention. Fig. 7 is a perspective view schematically showing a negative electrode current collector 21 included in the negative electrode 20 shown in Fig. 6. Fig. 8 is a longitudinal cross-sectional view schematically showing a configuration of a column 25 included in a negative electrode active material layer 23 in the negative electrode 20 shown in Fig. 6. Fig. 9 is a side view schematically showing a configuration of an electron beam vapor deposition apparatus 30 for forming the column 25.
The negative electrode 20 includes the negative electrode current collector 21 and the negative electrode active material layer 23.
The negative electrode current collector 21 includes a plurality of projections 22 provided on a surface 21 a in one side in the thickness direction thereof (herein after simply referred to as the "surface 21a") as shown in Fig. 7. The projections 22 may be provided on both surfaces in the thickness direction of the negative electrode current collector 21.

The projection 22 is a projection formed so as to extend outward from the surface 21 a of the negative electrode current collector 21. The height of the projection 22 is a distance from the surface 21a to a point (a furthermost end) of the projection 22, the point being furthest away from the surface 21a in the direction normal to the surface 21 a. The height of the projection 22 is not particularly limited, but is preferably 3 to 10 µm when measured as an average height. The cross-sectional diameter of the projection 22 in the direction parallel to the surface 21 a is also not particularly limited, but is, for example, 1 to 50 µm when measured as an average cross-sectional diameter

The average height of the projections 22 can be determined, for example, by observing a cross section of the negative electrode current collector 21 in the thickness direction thereof under a scanning electron microscope (SEM), measuring the height of, for example, one hundred projections 22, and calculating an average from the obtained measurement values. The average cross-sectional diameter of the projections 22 can also be determined in the same manner as the average height of the projections 22. Here, all of the plurality of projections 22 may not necessarily have the same height or the same cross-sectional diameter.

The projections 22 each have a substantially planar top at the tip in the growth direction thereof. The growth direction is a direction extending outward from the surface 21a of the negative electrode current collector 21. When the projection 22 has a planar top at the tip thereof, the bonding between the projection 22 and the column 25 is improved. It is more preferable that this planar top is substantially parallel to the surface 21 a in order to improve the bonding strength.

The shape of the projection 22 is circular in this embodiment. The shape of the projection 22 is the profile of an orthographic projection of the projection 22 seen from vertically above the projection 22 while the surface 21 a of the negative electrode current collector 21 is positioned so as to coincide with the horizontal plane. The shape of the projection 22 is not limited to circular, and may be, for example, polygonal, elliptical, parallelogramic, trapezoidal, rhombic, and the like. The polygonal shape is preferably a triangle to an octagon, in view of manufacturing costs and the like.

The number of the projections 22 and the spaces between the projections 22 are not particularly limited, but suitably selected according to the size (height, cross-sectional diameter, etc.) of the projections 22, the size of the columns 25 to be formed on the surfaces of the projections 22, and other factors. For example, the number of the projections 22 is about 10,000 to 10,000,000 projections/cm². The projections 22 are preferably formed such that the axis-to-axis distance between the adjacent projections 22 is about 2 to 100 µm.
When the shape of the projection 22 is circular, the axis of the projection 22 is a virtual line passing through the center of the circle and extending in the direction normal to the surface 21 a. When the shape of the projection 22 is polygonal, parallelogramic, trapezoidal, or rhombic, the axis of the projection 22 is a virtual line passing through the intersection point of diagonals and extending in the direction normal to the surface 21 a. When the shape of the projection 22 is elliptical, the axis of the projection 22 is a virtual line passing through the intersection point of major and minor axes and extending in the direction normal to the surface 21 a.
The arrangement of the projections 22 on the surface 21a is not particularly limited, but is preferably a staggered pattern, a grid pattern, a dose-packed pattern, and the like. In this embodiment, the projections 22 are arranged in a staggered pattern.

Further, the projection 22 may be provided with a minor projection (not shown) on the surface thereof. The dimensions of the minor projection are preferably smaller than the dimensions of the projection 22. This further improves the bonding between the projections 22 and the columns 25, making it possible to more reliably prevent the columns 25 from being separated from the projections 22. The minor projection protrudes outward from the surface of the projection 22. Two or more minor projections may be provided. The minor projection may be provided on the side surface of the projection 22 so as to extend in the circumferential direction and/or the growth direction of the projection 22. When the projection 22 has a planar top at the tip thereof, at least one minor projection may be formed on the planar top. The minor projection formed on the planar top may extend in one direction.

The minor projection can be formed, for example, by a photoresist method, specifically, by forming a resist pattern on the surface of the projection 22, and plating the surface with metal according to the pattern. Further, the minor projections can be formed by forming the projection 22 to be larger than the design dimensions, and removing predetermined portions of the surface of the projection 22 by etching.

The negative electrode current collector 21 can be produced by using a technique of forming irregularities on the surface of a metal sheet. For example, a roll with recesses corresponding to the projections 22 formed on the surface thereof (hereinafter referred to as a "projection-forming roll") is used. The recesses corresponding to the projections 22 each have an internal space corresponding to the projection 22 in size and shape, and the number and arrangement of the recesses are the same as those of the projections 22. The metal sheet is made of a metal material suitably applicable for the negative electrode current collector 21, and is, for example, a foil or film with a smooth surface. When forming the projections 22 on one side of the metal sheet, the projections 22 may be formed by bringing the projection-forming roll into press contact with a roll with a smooth surface such that their axes are arranged to be parallel to each other, and allowing a metal sheet to pass through the press-contacting portion, to perform pressure-molding. The roll with a smooth surface may be provided with an elastic layer on at least the surface thereof. The elastic layer is made of an elastic material.

When forming the projections 22 on both sides of the metal sheet, the projections 22 may be formed by bringing two projection-forming rolls into press contact with each other such that their axes are arranged to be parallel to each other, and allowing a metal sheet to pass through the press-contacting portion, to perform pressure-molding.
The contact pressure between the rolls is suitably selected according to the material and thickness of the metal sheet, the shape and dimensions of the projection 22, the setting of the thickness of the metal sheet after pressure-molding, namely, the thickness of the negative electrode current collector 21, and other conditions.

The projection-forming roll includes, for example, a ceramic roll and recesses (pits) provided on the surface of the ceramic roll, the recesses being corresponding to the projections 22. The ceramic roll is, for example, a ceramic roll including a core roll and a thermal sprayed layer. For the core roll, for example, a roll made of iron, stainless steel, or the like may be used. The thermal sprayed layer is formed by uniformly thermal-spraying a ceramic material such as chromium oxide on the surface of the core roll. The recesses are formed on the thermal sprayed layer. In forming the recesses, for example, a general laser used for processing a ceramic material may be used.

A different type of projection-forming roll includes a core roll, a base layer, and a thermal sprayed layer. The core roll is the same as the core roll of the ceramic roll. The base layer is formed on the surface of the core roll. On the surface of the base layer, recesses corresponding to the projections 22 are formed. The base layer provided with recesses can be formed, for example, by molding a resin sheet with recesses formed on one side thereof, placing the resin sheet around the surface of the core roll such that the side of the resin sheet opposite to the side on which the recesses are formed is brought into contact with the surface of the core roll, and bonding these together.

The plastic material used for forming the resin sheet preferably has a high mechanical strength, examples of which include a thermosetting resin such as unsaturated polyester, thermosetting polyimide, epoxy resin, and fluorocarbon resin; and a thermoplastic resin such as polyamide and polyetheretherketone. The thermal sprayed layer is formed by thermal-spraying a ceramic material such as chromium oxide so as to conform to the irregularities on the surface of the base layer. Therefore, the recesses on the base layer are formed to be larger than the design dimensions by an amount equivalent to the thickness of the thermal spray layer, with the thickness of the thermal sprayed layer taken into consideration.

Yet another different type of projection-forming roll includes a core roll and a cemented carbide layer. The core roll is the same as the core roll of the ceramic roll. The cemented carbide layer is formed on the surface of the core roll, and includes a cemented carbide such as tungsten carbide. The cemented carbide layer can be formed, for example, by thermal fitting or cool fitting a cemented carbide formed into a cylindrical shape, on the core roll. In thermal fitting of a cemented carbide layer, the cylinder of cemented carbide is heated and expanded, and then fitted onto the core roll. In cool fitting of a cemented carbide layer, the core roll is cooled and shrunk, and then inserted into the cylinder of cemented carbide. On the surface of the cemented carbide layer, recesses corresponding to the projections 22 are formed by, for example, laser processing.

Yet another type of projection-forming roll is a hard iron-based roll on which recesses corresponding to the projections 22 are formed by, for example, laser processing. The hard iron-based roll is, for example, a roll used for making a metal foil by rolling. Examples of the hard iron-based roll include a roll made of high-speed steel, forged steel, or the like. The high-speed steel is an iron-based material with a metal such as molybdenum, tungsten, or vanadium added thereto, the material being heat-treated to increase its hardness. The forged steel is an iron-based material produced by: heating a steel ingot, which is made by casting molten steel into a mold, or a steel slab, which is made from the steel ingot; forging the heated ingot or slab by pressing and hammering, or wrought-forming the heated ingot or slab by rolling and forging; and heat-treating the forged or wrought-formed ingot or slab.
The projections 22 can also be formed by utilizing a photoresist method and a plating method in combination.

The negative electrode active material layer 23 is as an aggregate of a plurality of the columns 25 as shown in Fig. 6. The columns 25 extend outward from the surfaces of the projections 22 of the negative electrode current collector 21. The columns 25 extend in a direction normal to the surface 21 a of the negative electrode current collector 21 or in a direction inclined relative to the foregoing normal direction. Since the columns 25 are spaced apart from one another with spaces formed between adjacent columns 25, the stress resulting from an expansion and contraction during charge and discharge is eased. As such, the separation of the columns 15 from the projections 22, the deformation of the negative electrode current collector 21, and the like are unlikely to occur.

The column 25 is a stack of eight columnar pieces 25a, 25b, 25c, 25d, 25e, 25f, 25g, and 25h as shown in Fig. 8. The column 25 is formed as follows. First, the columnar piece 25a is formed so as to cover the top of the projection 22 and a part of the side surface thereof continued from the top. Then, the columnar piece 25b is formed so as to cover the remaining part of the side surface of the projection 22 and a part of the top surface of the columnar piece 25a. That is, in Fig. 8, the columnar piece 25a is formed at one edge of the projection 22, the edge including the top of the projection 22, and the columnar piece 25b is partially stacked on the columnar piece 25a but mainly formed at the other edge of the projection 22.

Further, the columnar piece 25c is formed so as to cover the remaining part of the top surface of the columnar piece 25a and a part of the top surface of the columnar piece 25b. That is, the columnar piece 25c is formed so as to be mainly in contact with the columnar piece 25a. Further, the columnar piece 25d is formed so as to be mainly in contact with the columnar piece 25b. By stacking the columnar pieces 25e, 25f, 25g, and 25h one after another in the same manner, the column 25 is formed. Although eight columnar pieces are stacked in this embodiment, the number of columnar pieces is not limited thereto, and any number of columnar pieces may be stacked as long as it is two or more, to form a column. The number of stacked columnar pieces is not particularly limited, but is preferably 2 to 100.

The column 25 can be formed, for example, by an electron beam vapor deposition apparatus 30 as shown in Fig. 9. In Fig. 9, the members placed inside the deposition apparatus 30 are also shown by solid lines.
The deposition apparatus 30 includes a chamber 31, a first pipe 32, a fixing table 33, a nozzle 34, a target 35, an electron beam generating apparatus (not shown), a power source 36, and a second pipe (not shown).

The chamber 31 is a pressure-resistant container having an inner space, and the first pipe 32, the fixing table 33, the nozzle 34, the target 35, and the electron beam generating apparatus are placed in the inner space.
The first pipe 32 supplies a raw material gas to the nozzle 34. One end of the first pipe 32 is connected to the nozzle 34, and the other end thereof extends outside the chamber 31, and is connected to a raw material gas tank (not shown) or a raw material gas producing apparatus (not shown) via a mass flow controller (not shown). The raw material gas is, for example, oxygen, nitrogen, and the like.

The fixing table 33 is a rotatably supported plate-like member, and the negative electrode current collector 21 can be fixed on one surface of the fixing table 33 in the thickness direction thereof. The fixing table 33 is moved between two positions: one is a position shown by the solid line and the other is a position shown by the dot-dash line in Fig. 9. At the position shown by the solid line, the surface of the fixing table 33 on which the negative electrode current collector 21 is fixed faces the nozzle 34 located vertically below the fixing table 33, and the angle formed between the fixing table 33 and the horizontal line is α°. At the position shown by the dash-dot line, the surface of the fixing table 33 on which the negative electrode current collector 21 is fixed faces the nozzle 34 located vertically below the fixing table 33, and the angle formed between the fixing table 33 and the horizontal line is (180 - a)°. The angle α° can be suitably selected according to the dimensions of the column 25 to be formed, and the like.

The nozzle 34 ejects the raw material gas supplied from the first pipe 32 to the interior of the chamber 31. The nozzle 34 is provided vertically between the fixing table 33 and the target 35, and one end of the first pipe 32 is connected to the nozzle 34.
The target 35 holds an alloy-based negative electrode active material or a raw material thereof.

The electron beam generating apparatus irradiates the alloy-based negative electrode active material held in the target 35 with electron beams, to heat the alloy-based negative electrode active material and generate the vapor thereof. The power source 36, which is provided outside the chamber 31 and electrically connected to the electron beam generating apparatus, applies a voltage for generating electron beams to the electron beam generating apparatus. The second pipe introduces a gas to form the atmosphere in the chamber 31. An electron beam vapor deposition apparatus having the same configuration as that of the vapor deposition apparatus 30 is commercially available, for example, from Ulvac Inc.

In the case of using the electron beam vapor deposition apparatus 30, first, the negative electrode current collector 21 is fixed on the fixing table 33, and oxygen gas is introduced into the chamber 31. In such a state, the alloy-based negative electrode active material or the raw material thereof on the target 35 is irradiated with electron beams and heated to generate vapor thereof. In this embodiment, silicon is used as the alloy-based negative electrode active material. The vapor generated goes up vertically, is mixed with the raw material gas ejected from the nozzle 34 while passing around the nozzle 34, and further goes up until reaching the surface of the negative electrode current collector 21 fixed on the fixing table 33, and thus a layer containing silicon and oxygen is formed on the surfaces of the projections 22 (not shown).

When the fixing table 33 is positioned at the position shown by the solid line, the columnar pieces 25a as shown in Fig. 8 are formed on the surfaces of the projections. Next, when the fixing table 33 is moved and positioned at the position shown by the dash-dot line, the columnar pieces 25b as shown in Fig. 8 are formed. By moving the fixing table 33 repeatedly between the two positions, a plurality of the columns 25, each of which is a stack consisting of eight columnar pieces 25a, 25b, 25c, 25d, 25e, 25f, 25g, and 25h as shown in Fig. 8 are formed. As a result, the negative electrode active material layer 23 is formed. The negative electrode 20 is thus obtained.

When the alloy-based negative electrode active material is a silicon oxide represented by SiOₐ, where 0.05 < a < 1.95, the columns 25 may be formed so that the columns 25 each have a concentration gradient of oxygen in the thickness direction of the negative electrode active material layer 23. Specifically, the concentration gradient may be such that the ratio of oxygen contained therein is made high in the proximity of the negative electrode current collector 21, and the amount of oxygen contained therein is decreased with distance away from the negative electrode current collector 21. This further improves the bonding between the projections 22 and the columns 25.
When the raw material gas is not supplied from the nozzle 34, the columns 25 mainly composed of elementary silicon or elementary tin are formed.

### [Examples]

The present invention is specifically described below with reference to a reference example and an example.

### (Reference Example 1)

### (1) Production of positive electrode

First, 1 kg of lithium nickelate (LiNiO₂ positive electrode active material) powder having an average particle size of about 10 µm, 30 g of acetylene black (conductive agent), 80 g of polyvinylidene fluoride powder (binder), and 500 mL of N-methyl-2-pyrrolidone (hereinafter "NMP") were mixed sufficiently to prepare a positive electrode material mixture paste. The positive electrode material mixture paste thus prepared was applied onto one surface of a 15-µm-thick aluminum foil (positive electrode current collector), dried and rolled, to form a positive electrode active material layer having a thickness of 55 µm, whereby a positive electrode was produced. Thereafter, one end of a positive electrode lead made of aluminum was connected to the other surface of the aluminum foil opposite to the surface on which the positive electrode active material layer was formed.

### (2) Production of negative electrode

Chromium oxide was thermal-sprayed onto the surface of an iron roll of 50 mm in diameter, to form a ceramic layer having a thickness of 100 µm. On the surface of the ceramic layer, pits were formed by laser processing to produce a projection-forming roll, the pits being circular recesses each having a diameter of 12 µm and a depth of 8 µm. These pits were arranged in a close-packed pattern in which the axis-to-axis distance between adjacent pits was 20 µm. The pit was shaped such that the center of the bottom of the pit was almost flat, and the portion where the peripheral edge of the bottom and the side surface of the pit meet was rounded.

An alloy copper foil (trade name: HCL-02Z, thickness 20 µm, available from Hitachi Cable, Ltd.) containing zirconia in an amount of 0.03% by weight based on the total amount was heated at 600°C for 30 minutes in an argon gas atmosphere to perform annealing. The alloy copper foil was allowed to pass through the press contacting portion between the projection-forming roll and a stainless steel roll (diameter 50 mm) that were brought into press contact with each other such that their axes were arranged to be parallel to each other, at a line pressure of 2 t/cm, to plastically deform the alloy copper foil, whereby a negative electrode current collector sheet having a plurality of projections formed on one surface thereof was produced. The observation of the cross section of the resultant negative electrode current collector sheet in the thickness direction thereof under a scanning electron microscope showed that the average height of the projections was about 8 µm.

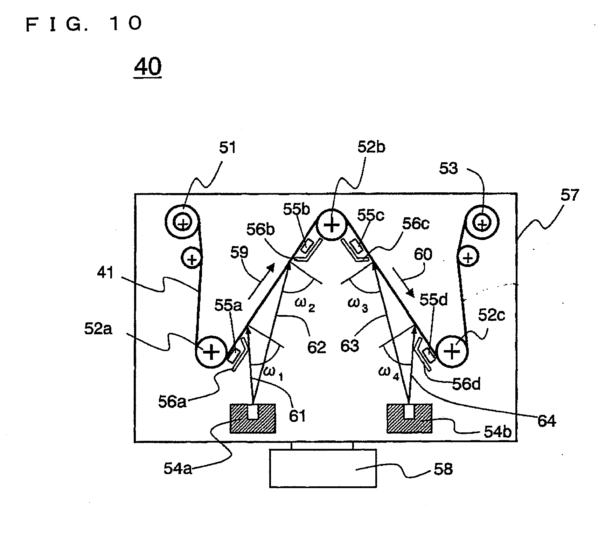

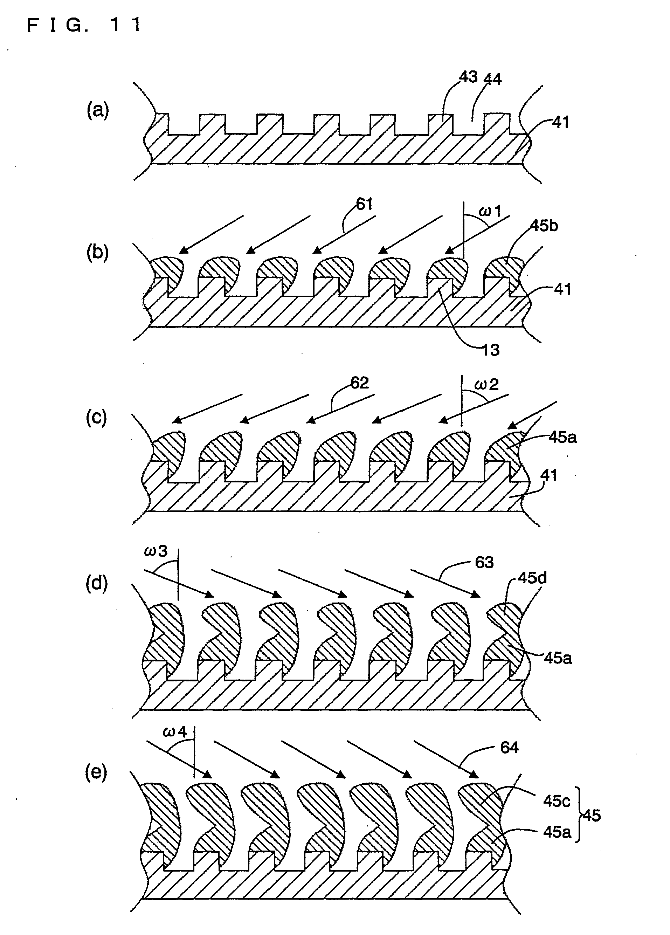

On the negative electrode current collector sheet obtained in the above, a negative electrode active material layer was formed by using a vapor deposition apparatus 40 as shown in Fig. 10, the negative electrode active material layer being an aggregate of columns 45 as shown in Fig. 11. The column 45 is a two-layer stack consisting of columnar pieces 45a and 45c. Fig. 10 is a side view schematically showing a configuration of another type of vapor deposition apparatus 40. In Fig. 10, only vapor deposition sources 54a and 54b are shown as a cross sectional view. Fig. 11 is a series of longitudinal cross-sectional views illustrating a process of forming a negative electrode active material layer. Fig. 11 (a) shows a step of feeding out a negative electrode current collector sheet 11 from a supply roll 51. Fig. 11 (b) shows a step of forming a columnar piece 45b. Fig. 11 (c) shows a step of forming a columnar piece 45a. Fig. 11 (d) shows a step of forming a columnar piece 45d. Fig. 11(e) shows a step of forming a columnar piece 45c.

The vapor deposition apparatus 40 includes the supply roll 51, film formation rolls 52a, 52b and 52c, a take-up roll 53, the vapor deposition sources 54a and 54b, gas introduction nozzles 55a, 55b, 55c and 55d, masks 56a, 56b, 56c and 56d, a vacuum chamber 57, and a vacuum pump 58.
The supply roll 51 is rotatably supported by a supporting means (not shown), and has the long negative electrode current collector sheet 41 wound around the circumferential surface thereof. Here, the negative electrode current collector sheet 41 is wound such that the surface on which the projections 43 are formed faces the axis of the supply roll 51.

The film formation rolls 52a, 52b are 52c are each rotatably supported by a supporting means (not shown), and convey the negative electrode current collector sheet 41 fed from the supply roll 51 toward the take-up roll 53 while holding the negative electrode current collector sheet 41 in a tensioned state. In this embodiment, the film formation rolls 52a are 52c are disposed substantially symmetrically to each other with respect to the film formation roll 52b.

As described below, the columns 45 are formed on the surfaces of the projections 43 of the negative electrode current collector sheet 11 while being conveyed, whereby a negative electrode sheet 42 is obtained.
The take-up roll 53 is rotatably supported by a supporting means (not shown), and winds up the negative electrode sheet 42 around the circumferential surface thereof. By activating the rotation of the take-up roll 53, a series of operations of feeding the negative electrode current collector sheet 41 from the supply roll 51, conveying the negative electrode current collector sheet 41 through the film formation rolls 52a, 52b are 52c, forming the columns 45 while the negative electrode current collector sheet 41 is being conveyed, and winding up of the negative electrode sheet 42 onto the take-up roll 53 is started.

The vapor deposition sources 54a and 54b generate a vapor of raw active material such as silicon or tin.
The vapor deposition source 54a is located vertically below the negative electrode sheet 41 being conveyed, and is located horizontally between the film formation rolls 52a and 52b. As such, the vapor generated from the vapor deposition source 54a goes up vertically and is supplied to the negative electrode current collector sheet 41 present between the film formation rolls 52a and 52b.
The vapor deposition source 54b is located vertically below the negative electrode sheet 41 being conveyed, and is located horizontally between the film formation rolls 52b and 52c. As such, the vapor generated from the vapor deposition source 54b goes up vertically and is supplied to the negative electrode current collector sheet 41 present between the film formation rolls 52b and 52c.
The vapor of raw active material can be generated, for example by heating the vapor deposition sources 54a and 54b with an electron beam heating means (not shown).

Gas introduction nozzles 55a, 55b, 55c and 55d are disposed between the film formation rolls 52a, 52b and 52c and the masks 56a, 56b, 56c and 56d, at a position proximate to the negative electrode current collector sheet 41 being conveyed, and supply a raw material gas such as oxygen to a film formation region on the negative electrode current collector sheet 41, the region on which the negative electrode active material layer is to be formed. The raw material gas reacts with the vapor of raw active material. For example, when the raw active material is silicon and the raw material gas is oxygen, the columns 45 composed of a silicon oxide are formed. By stopping the supply of raw material gas, the columns 45 composed of a simple element such as silicon or tin are formed.

The masks 56a, 56b, 56c and 56d are a plate-like member having an L-shaped cross section, and are located between the gas introduction nozzles 55a, 55b, 55c and 55d and the vapor deposition sources 54a and 54b such that the tip end in the shorter side thereof is disposed in proximate to the surface of the negative electrode current collector sheet 41 being conveyed. The masks 56a, 56b, 56c and 56d shield the negative electrode current collector sheet 41 from the vapor of raw active material.

The vacuum chamber 57 is a pressure resistant chamber in which the supply roll 51, the film formation rolls 52a, 52b and 52c, the take-up roll 53, the vapor deposition sources 54a and 54b, the gas introduction nozzles 55a, 55b, 55c and 55d, and the masks 56a, 56b, 56c and 56d are placed.
The vacuum pump 58 is connected to the vacuum chamber 57 and is used to reduce the internal pressure in the vacuum chamber 58.

In the step shown in Fig. 11 (a), first, the internal pressure in the vacuum chamber 57 is reduced to vacuum. Subsequently, the raw material gas (oxygen in this embodiment) is supplied from the gas introduction nozzles 55a, 55b, 55c and 55d to form an oxygen atmosphere having a pressure of 3.5 Pa. The vapor of raw active material (silicon in this embodiment) is generated from the vapor deposition sources 54a and 54b and is going up. In such a state, the negative electrode current collector sheet 41 is fed from the supply roll 51. The conveying direction of the negative electrode current collector sheet 41 is changed by the film formation roll 52a. The negative electrode current collector sheet 41 has the projections 43 formed on one surface of the thickness direction thereof, in which the space between one projection 43 and another projection 43 adjacent thereto forms the recess 44.

In the step shown in Fig. 11 (b), the negative electrode current collector sheet 41 is conveyed between the film formation rolls 52a and 52b in the direction indicated by an arrow 59 (in the direction away from the vapor deposition source 54a) with a predetermined inclined angle being maintained. In this step, a mixed gas composed of a silicon vapor generated from the vapor deposition source 54a and oxygen is mainly supplied to the surface of the negative electrode current collector sheet 41. In the vicinity of the mask 56a, the mixed gas is incident on the surface of the projections 43 on the negative electrode current collector sheet 41 in the direction indicated by an arrow 61. The angle of incident is ω₁. The angle of incident is an angle formed between the line normal to the surface of the negative electrode current collector sheet 41 and the line indicated by the arrow 61. On the surfaces of the projections 43, the silicon vapor reacts with the oxygen to form SiOₓ, and the SiOₓ is vapor-deposited, forming the columnar pieces 45b. This SiOₓ is a silicon oxide in which x is a number close to 2, and is analogous to SiO₂.

As the negative electrode current collector sheet 41 with the columnar pieces 45b formed thereon is conveyed from the film formation roll 52a toward the film formation roll 52b, the angle of incident of the silicon vapor is gradually increased and the columnar pieces 45b further grow. As this time, in the region where the silicon vapor is not blocked by the masks 56a and 56b, the number of silicon vapor particles and the amount of oxygen supplied from the gas introduction nozzles 55a and 55b vary according to the distance between the surface of the negative electrode current collector sheet 41 and the vapor deposition source 54a. Specifically, when the distance from the vapor deposition source 54a is short, SiOₓ where x is a small number is formed; and as the distance is increased, SiOₓ where x is a large number is formed. Accordingly, the columnar pieces 45b grow in such a manner that x varies continuously in the thickness direction of the negative electrode current collector sheet 41.

In the step shown in Fig. 11 (c), the silicon vapor is incident on the surface of the negative electrode current collector sheet 41 in the direction indicated by an arrow 62. The angle of incident is an angle formed between the line normal to the surface of the negative electrode current collector sheet 41 and the line indicated by the arrow 62, and is shown by w2 in Fig. 10. Since a sufficient amount of oxygen is supplied from the gas introduction nozzle 55b in the vicinity of the mask 56b, a negative electrode active material having a composition represented by SiOₓ where x is a large number, namely_{;} the composition being analogous to SiO₂ is deposited, forming the columnar pieces 45a serving as the first layer. In particular, at the tip ends of the columnar pieces 45a, a composition analogous to SiO₂ in which x is a large number is efficiently formed from the silicon vapor entering from around the mask 56b, while the negative electrode current collector sheet 41 is traveling vertically above the mask 56b. The columnar pieces 45a grow obliquely from the surfaces of the projections 43, and each have a length measured from the surface of the projection 43 to the tip end thereof is 15 µm.

In the step shown in Fig. 11 (d), the negative electrode current collector sheet 41 with the columnar pieces 45a formed thereon is conveyed between the film formation rolls 52b and 52c in the direction indicated by an arrow 60 (in the direction approaching the vapor deposition source 54b) with a predetermined inclined angle being maintained. The conveying direction of the negative electrode current collector 41 is changed by the film formation roll 52b. In this step, a silicon vapor generated from the vapor deposition source 54b is mainly supplied to the surface of the negative electrode current collector sheet 41. In the vicinity of the mask 56c, the silicon vapor is incident on the surface of the negative electrode current collector sheet 41 in the direction indicated by an arrow 63, and the angle of incident is ω3.

In the vicinity of the mask 56c, as in the step shown in Fig. 11(b), an active material having a composition represented by SiOₓ where x is a large number, namely, the composition being analogous to SiO₂ is formed from the silicon vapor incident at the angle of incident w3 entering from around the mask 56c and oxygen supplied from the gas introduction nozzle 55c. The active material thus formed is deposited on the surfaces of the columnar pieces 45a, and the columnar pieces 45d start to grow.

Thereafter, as the negative electrode current collector sheet 41 travels between the film formation rolls 52b and 52c, the angle of incident varies continuously from ω3 to w4, and the columnar pieces 45d serving as the second layer further grow due to the incident of the silicon vapor. In the region where the silicon vapor is not blocked by the masks 56c and 56d, the number of silicon vapor particles and the amount of oxygen supplied from the gas introduction nozzles 55c and 55d vary according to the distance between the surface of the negative electrode current collector sheet 41 and the vapor deposition source 54b. Specifically, when the distance between the negative electrode current collector sheet 41 and the vapor deposition source 54b is short, SiOₓ where x is a small number is formed; and as the distance is increased, SiOₓ where x is a large number is formed. Accordingly, the columnar pieces 45d grow in such a manner that x varies continuously in the thickness direction of the negative electrode current collector sheet 41.

In the step shown in Fig. 11 (e), the silicon vapor is incident on the surface of the negative electrode current collector sheet 41 in the direction indicated by an arrow 64, and the angle of incident is ω4. In the vicinity of the mask 56d, a negative electrode active material having a composition represented by SiOₓ where x is a large number, namely, the composition analogous to SiO₂ is formed from oxygen supplied from the gas introduction nozzle 55d. The active material thus formed is deposited on the surfaces of the columnar pieces 45d, forming the columnar pieces 45c serving as the second layer. In particular, while the negative electrode current collector sheet 41 is traveling in the vicinity of the tip end of the mask 56d which is the shorter-side tip end of the cross section thereof, the silicon vapor enters from around the mask 56d in the direction away from the negative electrode current collector sheet 41. As such, a negative electrode active material having a composition analogous to SiO₂ in which x is a large number is efficiently deposited.

The columnar pieces 45c serving as the second layer grow obliquely from the surfaces of the columnar pieces 45a serving as the first layer, and each have a length measured from the surface of the columnar piece 45a to the tip end thereof is 15 µm. The columnar pieces 45a and the columnar pieces 45c grow in opposite directions. In such a manner, a negative electrode active material layer being an aggregate of a plurality of the columns 45 is formed, and a negative electrode 42 is formed. The negative electrode 42, the conveying direction of which is changed by the film formation roll 52c, is wound up onto the take-up roll 53. It should be noted that by repeating the process comprising the steps shown in Fig. 11 (b) to Fig. 11 (e), columns each of which is a stack of any number of columnar pieces can be obtained.

The thickness of the negative electrode active material layer was 16 µm. The thickness of the negative electrode active material layer is an average of heights of any ten columns 45, which is determined by observing the cross sections of the negative electrode active material in the thickness direction thereof under a scanning electron microscope and measuring the heights of ten columns 45 selected arbitrarily from the columns 45 formed on the surfaces of the projections 43 and averaging the measured values. Further, the amount of oxygen contained in the negative electrode active material layer was measured by a combustion method. The result found that the composition of the active material forming the negative electrode active material layer was SiO_{0.5}.

Next, lithium metal was vapor-deposited on the surface of the negative electrode active material layer. By vapor depositing lithium metal, lithium was supplemented into the negative electrode active material layer by an amount equivalent to the irreversible capacity stored at the time of initial charge and discharge. The vapor deposition of lithium metal was performed using a resistance heating vapor deposition apparatus (available from ULVAC, Inc.) in an argon gas atmosphere. Specifically, lithium metal was placed in a tantalum boat in the resistance heating vapor deposition apparatus, and the negative electrode was fixed such that the negative electrode active material layer faced the tantalum boat. In this state, the tantalum boat was energized with a current of 50 A, to perform vapor deposition for 10 minutes in an argon atmosphere. In such a manner, the negative electrode 42 in which a silicon thin film being an aggregate of a plurality of the columns 45 was formed on the surface of the negative electrode current collector 41 was obtained. Thereafter, one end of a negative electrode lead made of nickel was connected to the other surface of the negative electrode current collector 41 opposite to the surface on which the silicon thin film was formed.

### (3) Fabrication of battery

The positive electrode, a polyethylene microporous film (separator, trade name: Hipore, thickness 20 µm, available from Asahi Kasei Corporation), and the negative electrode were stacked such that the positive electrode active material layer and the negative electrode active material layer face each other with the polyethylene microporous film interposed therebetween, to form a stacked electrode assembly. The stacked electrode assembly thus formed was inserted into a bag-like battery case made of a laminate film of ethylene vinyl acetate/polyethylene/Al foil/polyethylene terephthalate. The internal pressure in the battery case was reduced, and in this state, a non-aqueous electrolyte was injected into the battery case. For the non-aqueous electrolyte, a non-aqueous electrolyte obtained by dissolving LiPF₆ at a concentration of 1.2 mol/L in a mixed solvent containing ethylene carbonate (EC) and ethyl methyl carbonate (EMC) at a volume ratio of 1:1 was used.

Subsequently, the positive electrode lead and the negative electrode lead were guided outside the battery case through the opening of the battery case, and the opening was sealed by welding, while the internal pressure in the battery case was reduced to vacuum. In such a manner, a prismatic lithium ion secondary battery having a thickness of 5.5 mm, dimensions of 5.0 cm x 5.0 cm, a battery capacity of 2.5 Ah, and an average voltage of 3.4 V was fabricated.

### (Example 1)

The prismatic lithium ion secondary battery obtained in Reference Example 1 was used to produce a battery pack. First, six batteries of Reference Example 1 were mounted one by one on six trays made of stainless steel, and were arranged on the same plane as shown in Fig. 2. The battery was fixed on the battery-mounting portion of the stainless steel tray with a resin double-sided tape. The stainless steel tray was made of a 30-µm-thick stainless steel sheet, and the outer dimensions of the stainless steel tray were 6.0 mm (height: height of the side wall) x 60 mm x 70 mm.
The six batteries were connected with a lead wire such that two are connected in series and three in parallel. Connecting in such a manner provides an energy density of 51 Wh. This is calculated as follows: 2.5 Ah × 3 = 7.5 Ah.
7.5 Ah × 6.8V = 51 Wh.

Thereafter, the six stainless steel trays arranged as described above were inserted into a bag-like housing with one end in the longitudinal direction thereof being open. The outer bottom surfaces of the battery-mounting portions of the stainless steel trays were fixed on the inner bottom surface of the housing. The housing was made of a composite of polyethylene terephthalate (PET)/silica glass (trade name: UMLATE^{®} flame resisting grade, available from Unitika, Ltd.). The outer dimensions of the housing were 10.0 mm (height) x 190 mm x 150 mm. The both ends of the lead wire were guided outside the housing through the opening of the housing, and the opening was sealed by thermal welding. In such a manner, a battery pack of the present invention as shown in Figs. 1 and 2 was produced.

Despite the inclusion of a tray in the interior thereof, the battery pack of the present invention including a lithium ion secondary battery having a reduced thickness has a height (thickness) as small as 10 mm. Therefore, the battery pack of the present invention can be suitably used as a power source for thin electronic devices such as personal computers.

### [Industrial Applicability]

The battery pack of the present invention can be used for the same applications as the conventional lithium ion secondary batteries, and is particularly useful as a power source for portable electronic devices, such as personal computers, mobile phones, mobile equipment, personal digital assistants (PDAs), portable game machines, and video cameras. Further, the battery pack of the present invention is expected to be used as a main power source or auxiliary power source for driving an electric motor in electric vehicles, hybrid vehicles, plug-in hybrid vehicles, fuel cell-powered vehicles, and the like; a power source for driving an electrically-powered tool, deaner, robot, and the like.

## Claims

1. A battery pack comprising: a plurality of lithium ion secondary batteries electrically connected together in series, in parallel, or in series-parallel combination; a tray; and a housing,
said lithium ion secondary batteries each including an electrode assembly containing an alloy-based negative electrode active material serving as a negative electrode active material, and each having a sealed surface,
said tray including a battery-mounting portion and a side wall, said battery-mounting portion having said lithium ion secondary battery mounted thereon, and said side wall being formed so as to stand perpendicular to said battery-mounting portion from the edge of said battery-mounting portion and having a height larger than the thickness of said lithium ion secondary battery, and
said housing accommodating said tray with said plurality of lithium ion secondary batteries mounted thereon.

2. The battery pack in accordance with claim 1, wherein said lithium ion secondary battery is arranged so as to face a peripheral portion of said housing.

3. The battery pack in accordance with claim 1, wherein said electrode assembly is a wound electrode assembly having a winding axis, and said sealed surface of said lithium ion secondary battery and said winding axis of said wound electrode assembly are orthogonal to each other.

4. The battery pack in accordance with claim 2, wherein said housing is provided with a gas discharge means at said peripheral portion thereof in a vicinity of said sealed surface of said lithium ion secondary battery.

5. The battery pack in accordance with claim 1, wherein the number of said lithium ion secondary batteries is equal to the number of said trays, and said lithium ion secondary batteries are mounted one by one on said trays.

6. The battery pack in accordance with claim 5, wherein a partition member is provided between one of said trays and another one of said trays adjacent thereto.

7. The battery pack in accordance with claim 1, wherein said alloy-based negative electrode active material is at least one selected from the group consisting of an alloy-based negative electrode active material comprising silicon and an alloy-based negative electrode active material comprising tin.

8. The battery pack in accordance with claim 7, wherein said alloy-based negative electrode active material comprising silicon is at least one selected from the group consisting of silicon, a silicon oxide, a silicon nitride, a silicon-containing alloy, and a silicon compound.

9. The battery pack in accordance with claim 7, wherein said alloy-based negative electrode active material comprising tin is at least one selected from the group consisting of tin, a tin oxide, a tin-containing alloy, and a tin compound.
